**Europäisches Patentamt**

(19) **European Patent Office**

**Office européen des brevets**

(11) Publication number: **0 056 137**
**B1**

(12) **EUROPEAN PATENT SPECIFICATION**

(45) Date of publication of patent specification: **26.08.87**

(51) Int. Cl.⁴: **G 01 F 1/66**

(21) Application number: **81110556.8**

(22) Date of filing: **17.12.81**

(54) Flowmeter system with ultrasonic energy improvement in equilibration.

(30) Priority: **13.01.81 US 224785**

(43) Date of publication of application:
**21.07.82 Bulletin 82/29**

(45) Publication of the grant of the patent:
**26.08.87 Bulletin 87/35**

(84) Designated Contracting States:
**DE FR GB**

(56) References cited:
**US-A-4 003 252**
**US-A-4 069 713**
**US-A-4 164 865**

(73) Proprietor: **THE PERKIN-ELMER CORPORATION**
**Main Avenue**
**Norwalk Connecticut 06856 (US)**

(72) Inventor: **Loveland, Robert S.**
**812 Coral Tree Drive**
**West Covina California 91791 (US)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a method of measuring the flow of a fluid in a confined flow path and a flowmeter system for carrying out the method according to the preamble of claims 1 and 4, respectively.

A method and a flowmeter system of the aforementioned kind are known from US—A—4 164 865 of Hall and Loveland. The known method and system use two transducers for transmitting acoustic compression waves for selected time periods alternately upstream and downstream in a fluid flowing in a path, the non-transmitting transducer being effective as a receiving transducer upon the respective other of said transducers being effective as a transmitting transducer, and a phase detector being provided with the signals fed to the transmitting transducer and output by the receiving transducer, respectively. Switching means alternately connect one of said transducers to an oscillator means and the other of said transducers to said phase detector. The output signals of said phase detector are used for providing information on the fluid flow between the transducers.

A flowmeter system of the afore-mentioned kind is known from US—A—4 069 713 of Gassmann, comprising two voltage controlled oscillators which selectively receive one of the phase difference signals output from the phase detector. The frequencies of the oscillators are adjusted by the phase difference signals such that the sound wavelength between the two transducers is kept constant in both modes, i.e., sound propagation in the same and opposite directions of the fluid flow. The output signals of the oscillators are fed to a mixer where they are mixed with each other. The output of the mixer is displayed by a frequency meter, the reading of which is indicative of the fluid flow between the two transducers.

This system suffers from the drawback that two oscillators are used which must be controlled and that in operation a so-called "dead time" is needed in order to control the frequency of the oscillators because their frequency difference is used for the measurement.

US—A—4003252 of DeWath is directed to a flowmeter having an unobstructed tubular wall thereby eliminating all impediments to the flow path of the fluid and eliminating all cavities in which debris might collect. To measure flow of a selected fluid in this flowmeter, however, required a calibration for that particular fluid and required a recalibration if the flow of a different fluid was to be measured since the flowmeter was not responsive to changes in fluid species or densities.

The Hall and Loveland invention according to US—A—4164865 provided a flowmeter that measured flow accurately regardless of changes in fluid composition or temperature and provided a flowmeter with a means for determining a change in velocity of sound of the fluid being measured.

This known acoustical wave flowmeter system had two spaced apart crystal transducers in the wall of the flowmeter conduit (sometimes called a cavity) to produce ultrasonic acoustic compressions at selected frequencies in the fluid within the cavity. The transducers were alternately switched into a transmit and a receive mode to generate upstream and downstream transmitted and received signals with an automatic means to adjust the transmitted frequencies to compensate for changes in velocity of the acoustic compressions in the fluid caused by changes in fluid composition and temperature. The electronic circuitry involved in the known flowmeter system includes means for measuring and storing signals representing the phase difference between the transmitting transducer signal producing the acoustic compressions and the signal produced by the receiving transducer during each of two successive transmit receive cycles. Circuit means were provided to determine the difference between the signals representing the two successive phase differences wherein the sign of the difference corresponds to the direction of the fluid flow and the magnitude of the difference corresponds to the rate of fluid flow through the flowmeter. Circuit means were also provided to add the two successive phase difference signals together to obtain a signal proportional to the velocity of sound in the fluid moving through the flowmeter. This latter signal indicated the change in composition of the fluid flowing through the meter.

In this known Hall and Loveland flowmeter system, the crystal transducers producing the energy in the fluid in the cavity, transmitted alternately with a period in between such transmissions called "dead" time. This dead time was an interval after the time one transmission ceased and before the other transmission started. Thus, one transducer would transmit and then, after a period of time, the other transducer would transmit, then, after a period of time, the first transducer would transmit again, and so on. It was thought that the acoustical energy in the fluid in the cavity must be allowed to decay to obtain the maximum result, hence the need for the dead times and in an effort to reduce noise and offset drift, experiments in transmission times and dead times were made. The transmission times were changed and the dead times were changed slightly but to no avail. No matter what periods of time for the transmission and dead times were selected, the system did not improve.

For example, in the Hall and Loveland US—A—4 164 865, the transmission times for the transducers, shown as X and Y pulses, were of 2.5 milliseconds in length with an interval of dead time of 2.5 milliseconds in between. When one transducer was transmitting, a phase difference measurement was made after the transmission was half way through its time period, that is, after 1.25 milliseconds had elapsed. This was to allow for the energy to equilibrate in the flow cavity but, since this equilibration time was only 1.25 milliseconds long, inaccuracies in the measurement occurred. This was particularly critical when the flowmeter was subjected to different fluid constituents which would cause the transmitted energy to change. This inaccuracy was also apparent when zero measurements were attempted, i.e., measurements of the energy in the cavity under conditions of no fluid flow. Without sufficient time to equilibrate, drift in zero measurements occurred.

Accordingly it is the object of this invention to provide a method and a flowmeter system mentioned in the introductory portion of this specification for measuring fluid flow and density with improved performance having less noise, increased span stability, minimum drift in zero flow measurements and increased transmission times to give the energy produced by the transmissions more time to equilibrate, by eliminating dead periods between transmissions, thus allowing the following transmission to swamp out the energy in the cavity produced by the prior transmission.

This object is obtained by a method and a flowmeter system according to the characterizing part of patent claims 1 and 4, respectively.

The invention is based on the fact found quite unexpectedly that it is not necessary for the energy in cavity to decay and that, as a matter of fact, quite the opposite is true. If the dead times are eliminated altogether and if the second transmission follows immediately after the first transmission, the energy of the second transmission "swamps out" the energy of the first transmission. This allows the transmission times to be longer within the same transmit-receive cycles as before, thus permitting the transmitting energy to equilibrate. Allowing the transmitted energy to equilibrate permits more accurate measurements of the waves in the cavity. This results in an improvement in the accuracy of the measurement zero and span (system gain).

More specifically, with the first transmission remaining ON a longer time and with the second transmission from the other transducer occurring immediately thereafter, and remaining ON for a longer time, energy in the fluid in the cavity has more time to equilibrate and thus more accurate measurements can be made. In order to compare the situation with that explained before, the energy is now allowed 3.75 milliseconds to equilibrate before the phase measurement period of 1.25 milliseconds.

In the following description the invention, its features and the profits thereof are explained in more detail with reference to the drawings, wherein:

Fig. 1 is a schematic diagram of the flowmeter including the transducers and a block diagram of the electronic circuitry associated therewith,

Fig. 2 is the detailed circuit diagram of a combinational logic and clock circuits for controlling operations of the system, and

Fig. 3 is a timing pulse chart for the circuit Figure 2.

Detailed Description

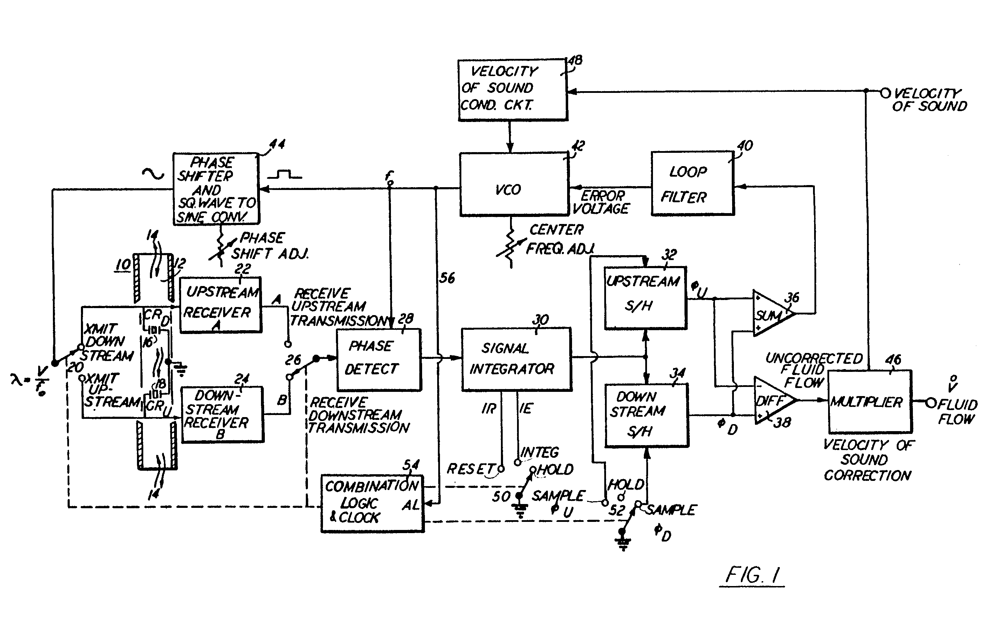

Figure 1 illustrates the flowmeter system of the present invention which includes a transducer assembly 10, shown in longitudinal section, which comprises a substantially cylindrical body having a central cylindrical opening, or bore 12, through which a fluid medium flows in both directions, as indicated by the arrows 14.

The transducer assembly is made generally in accordance with the description in the US—A—4 003 252 to DeWath and is provided with spaced apart cylindrical crystal transducers whose inner diameters are substantially coextensive with the cylindrical bore 12 so that the wall is substantially uniform with no obstructions or cavities to provide a place for particulate matter to collect or to provide an impediment for the flow of fluid therethrough. The purpose of the transducers is described in US—A—4 003 252 and in US—A—4 164 865 to Hall and Loveland.

While US—A—4 164 865 to Hall and Loveland also showed and described, in great detail, control circuitry for operating the crystal transducers to accomplish the desired results, for the purpose of this invention, this circuitry has been simplified into block diagrams and reference can be made to this patent if more detailed information on the operation of the circuit is thought necessary.

As can be seen in Figure 1, the two ultrasonic crystal transducers, represented by crystals 16 and 18, also identified as $CR_D$ and $CR_U$, are alternately each connected to the transmission control circuitry via a switching mechanism 20. When one transducer is connected to the transmission circuitry via switching mechanism 20, the other transducer is in the receive mode the output of which in turn is connected via a second switching mechanism 26 to a phase detector 28, a signal integrator 30 and two sample-and-hold circuits 32 and 34, identified as upstream and downstream. The outputs of these two sample-and-hold circuits are connected to two operational amplifiers, one identified as a summing amplifier 36 and the other identified as a difference amplifier 38. The output of the summing amplifier 36 will indicate the velocity of sound and the output of the difference amplifier will indicate the magnitude and direction of the measured fluid flow. The output of the summing amplifier is connected to a loop filter 40 and to a voltage controlled oscillator 42 (VCO) which is connected back to the phase detector 28 and to a phase shifter and square-wave-to-sine wave converter 44. The phase shifter and converter 44 output is connected back to the first switching mechanism 20. Also like the summing amplifier, the output of the difference amplifier 38 is connected to the VCO 42 but through a multiplier 46 and a velocity of sound conditioning circuit 48. One output of the multiplier is the magnitude and direction of the fluid flow as stated above and the second output represents the relative velocity of sound. Shown connected by dotted lines are the first and second switching mechanisms 20 and 26 and two additional switching mechanisms 50 and 52 all under the control of a combinational logic and clock circuit 54. The circuit 54 alternates transmit and receive functions of the two crystal transducers 16 and 18, alternates the output of the upstream and downstream receivers 22 and 24, operates the integrator 30 between reset, integrate and hold functions and, finally, operates the upstream and downstream sample-and-hold circuits 32 and 34 through a sample, hold, and sample function.

As shown in Figure 1, the ultrasonic crystals 16 and 18 are alternately switched into either the transmit or receive mode by the combinational logic circuit. Thus, while one crystal is receiving, the other crystal is transmitting.

For each transmit receive cycle, the phase difference between the transmit signal and the received signal is detected by the phase detector 28. The average value is determined for each transmit receive cycle by the integrator circuit 30 which goes through an integrate, hold and reset mode for each transmit/receive cycle. During each integrator hold period, the respective sample-and-hold-circuit for the upstream phase and the downstream phase is ready to accept the new signal (sample mode) as data is available at the integrator output. The upstream and downstream sample-and-hold-circuits are updated with new data at the end of each respective transmit/receive cycle and store (hold) the information during the wait period.

In the differential amplifier 38, the stored values are then subtracted with the output indicating the direction and magnitude of the fluid flow. In addition, the same stored values are added together in the summing amplifier to determine if a common mode change has occurred in the fluid medium. A common mode change is caused by a change in the velocity of the ultrasound which, in turn, may be due to either temperature or fluid species change. The result is that the sum of the upstream and downstream data, held by the respective sample-and-hold circuits, changes in a manner which causes an error voltage signal at the voltage controlled oscillator (VCO) 42 input to change the transmit frequency in a direction which returns the wave length of the ultra-sound frequency to its original value thereby keeping the wave length constant.

The components of the control circuitry thus far described correspond to the control circuitry of the flowmeter system of US—A—4 164 865 to Hall and Loveland; it being understood that the foregoing is a simplification of said known control circuitry. For example, the switching mechanism 20 in that disclosure is actually a combination of high speed transistorized switches comprised of transistors Q1 through Q8 controlled from the clock source by pulses X, Y, Q3 and $\overline{Q3}$ applied to their respective inputs, switching mechanism 26 are transistors Q9 and Q10 with pulses A & B applied to their respective inputs, etc. Other switching mechanisms exist in the circuitry of US—A—4 164 865, operated by the clock source but otherwise the block diagrams correspond to the known circuitry. It is understood that the other switching mechanisms were shown here to illustrate the operation of the circuitry in the block diagram only.

As hereinabove stated, this invention improves the known system by increasing the transmission times of the crystal transducers, by eliminating the dead time periods and by measuring the phase differences in a later time period after initiation of transmission. This is accomplished in the combinational logic and clock which will now be described. In the Hall and Loveland patent US—A—4 164 865 a free running clock source, integrated circuit CD4047, was utilized to provide the gating pulses for the circuit and such an independent clock source may be used here, too. However, a synchronous clock whose frequency is dependent upon the voltage controlled oscillator 42 is preferred and will be described hereinafter.

Thus, in Figure 1, there is shown a conductor line 56 connecting the voltage controlled oscillator 42 to the combinational logic and clock circuit 54 thereby indicating the synchronization of the clock with the output of the VCO.

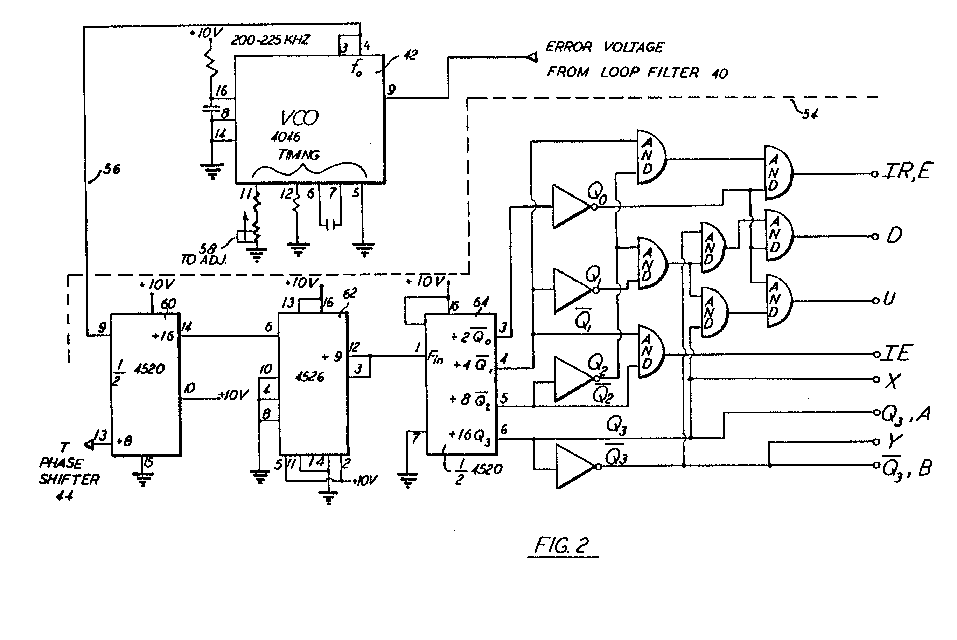

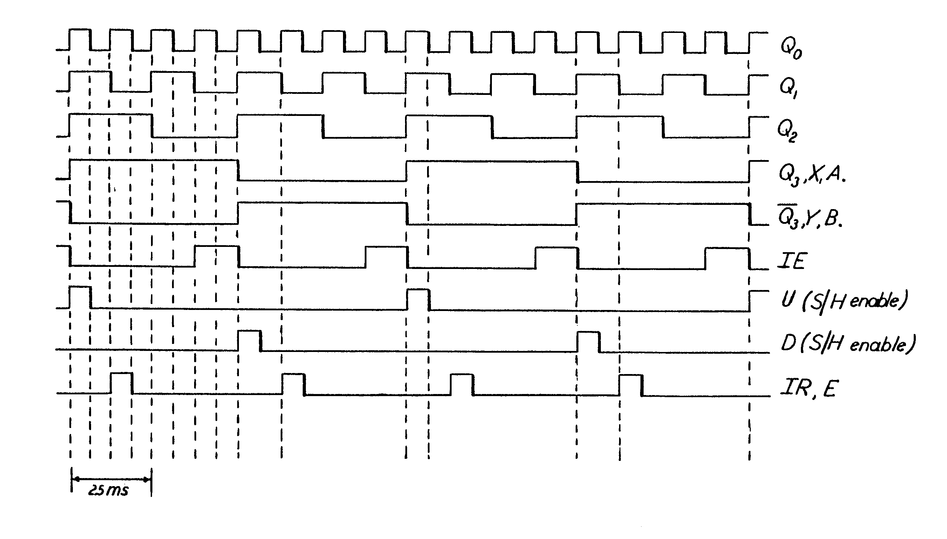

As shown in Figure 2, the VCO is an integrated circuit (Phase Lock Loop) type CD4046 to which is coupled a resistance and capacitor network 58 including a variable resistor for adjusting the open loop frequency. The VCO is coupled at input pin 9 to the loop filter 40 and VCO output pin 4 is connected to a series of integrated circuits 60, 62 and 64. Integrated circuit 60 is connected at pin 9 to the output of the VCO and its output pin 14 is connected to input pin 6 of the integrated circuit 62. The output pin 12 of integrated circuit 62 is connected to pin 1 of integrated circuit 64, pins 3, 4, 5 and 6 of which are outputs $\overline{Q_0}$, $\overline{Q_1}$, $\overline{Q_2}$, and $Q_3$, respectively. The signals produced at these pins are combined by the AND gates and inverters of Figure 2 to produce the respective pulse streams as shown in Figure 3.

The square wave signal at output pin 4 of the VCO, responsive to the error voltage applied at pin 9 and to the capacitor resistance network, operates to dynamically shift the frequency of the voltage controlled oscillator to response to changes in the velocity of sound in the fluid for the reasons previously described.

A review of the pulse streams shown in Figure 3 shows that the transmit and receive pulses Q3 and $\overline{Q3}$ are combined with transmit pulses X and Y, respectively, and that the transmit pulses X and Y for each transducer begin and end immediately following the prior transmission for the reasons described above. Note that X and Y pulses are combined with Q3 and $\overline{Q3}$ pulses so that the upstream receiver will be ON while the downstream transmitter is transmitting and vice versa.

This figure shows also that the phase sampling (integrate enable IE) occurs during the last quarter of the transmission time thus giving three quarters of the transmission time to energy equilibration that is 3 times the equilibration time that was provided in US—A—4 164 865 to Hall and Loveland.

This results in a decrease in system noise and an improved span stability because the phase measurements of the received signals are more accurate since the acoustical energy has had time to equilibrate. Previously, insufficient time was allowed for the energy to equilibrate.

It should be apparent from the foregoing that this invention may be incorporated into the circuitry of US—A—4 164 865 to improve its performance.

**Claims**

1. A method of measuring the flow of fluid in a confined flow path comprising the steps of:

transmitting acoustic compressions for a predetermined period of time at a first point in said confined flow path into said fluid,

transmitting acoustic compressions for a predetermined period of time at a second point in said flow path into said fluid following the cessation of the first-mentioned transmission, said second point being spaced from said first point along the flow path of the fluid,

measuring the acoustic compressions in said fluid at said second point during the transmission of acoustic compressions at said first point,

measuring the acoustic compressions in said fluid at said first point during the transmission of acoustic compressions at said second point,

determining in each of said periods of time the phase differences between the acoustic compressions received and the acoustic compressions transmitted and processing said measured phase differences with each other in order to derive a signal indicative of the fluid flow and a control signal for controlling the exciting frequencies of said acoustic compressions such that the wavelength transmitted from the first point is equal to that transmitted from the second point, said wavelengths being kept constant,

waiting a selected period of time and then measuring the acoustic compressions in said fluid,

characterized in that said transmission of acoustic compressions in each of said predetermined periods of time is started immediately following the cessation of the transmission in the preceding time period, said selected period of time being at least three-quarters of the transmission period.

2. The method as claimed in claim 1 further including adjusting the frequency of transmission to a frequency where a predetermined wavelength occurs between said first and second points regardless of the fluid species or density.

3. The method as claimed in claim 1, wherein the frequency of transmission is adjusted such that the system defined by said transducers is operated at the acoustic resonance to maximize the magnitude of the signal produced at the receiving transducer.

4. A flowmeter system for carrying out the method of claim 1, comprising:

acoustic energy exciting voltage controlled oscillator means (42),

two transducers (16, 18) for alternately transmitting acoustic compression waves for predetermined time periods upstream and downstream, respectively, in a fluid flowing in a path, said transducers (16, 18) being arranged in spatial relationship along the flow path of the fluid, the non-transmitting transducer being effective as a receiving transducer upon the respective other of said transducers being effective as a transmitting transducer,

a phase detector (28) provided with the signals fed to the transmitting transducer (16, 18) and output by the receiving transducer (18, 16), respectively,

first switching means (20, 26) for alternately connecting one of the said transducers (16, 18) to said voltage controlled oscillator means (42) and the other of said transducers (18, 16) to said phase detector (28),

signal processing means (30—38) for processing signals with each other derived from the phase difference signals output from the phase detector (28) in the different switching conditions of second switching means (50, 52) being actuated in cooperation with said first switching means (20, 26) thereby providing a signal indicative of the fluid flow,

said signal processing means comprising circuit means (38) for producing a difference signal dependent on the difference between the phase differences measured in two succeeding time periods, the magnitude and sign of said difference signal being directly related to the instantaneous fluid flow rate and its direction, respectively,

said signal processing means further comprising circuit means (36) for producing a summing signal dependent on the sum of the phase differences,

circuit means (40) being provided with said summing signal for automatically adjusting the frequency of the voltage controlled oscillator means (42) in order that the wavelengths of the acoustic compression waves produced by the transducers (16, 18) are kept constant, and equal,

combined logic and clock means (54) for controlling said first and second switch means (20, 26, 50, 52) so that the evaluation of the acoustic compressions is started only after a selected period of time in each of said time periods, characterized by:

said logic and clock means (54) being arranged to control said first switching means (20, 26) such that the transmission for each transducer (16, 18) begins immediately following the end of the prior transmission of the respective other transducer (18, 16), and being further arranged to control said signal processing means (30—38) such that the output of said phase detector (28) is evaluated only in the last quarter of said transmission time periods.

**Patentansprüche**

1. Verfahren zum Messen der Strömung eines Fluides in einem begrenzten Strömungsweg, mit folgenden Schritten:

Aussenden akustischer Druckwellen für eine vorbestimmte Zeitdauer an einem ersten Punkt in dem begrenzten Strömungsweg in das Fluid,

Aussenden akustischer Druckwellen für eine vorbestimmte Zeitperiode an einem zweiten Punkt im Strömungsweg in das Fluid im Anschluß an die Beendigung der erstgenannten Aussendung, wobei der zweite Punkt im Abstand zu dem ersten Punkt längs der Strömungsweges des Fluides gelegen ist,

Messen der akustischen Druckwellen in dem Fluid an dem genannten zweiten Punkt während der Aussendung der akustischen Druckwellen an dem ersten Punkt,

Messen der akustischen Druckwellen in dem Fluid an dem genannten ersten Punkt während der Aussendung der Druckwellen an dem genannten zweiten Punkt,

in jeder der Zeitperioden Bestimmen der Phasendifferenzen zwischen den empfangenen akustischen Druckwellen und den ausgesendeten akustischen Druckwellen und Verarbeiten der gemessenen Phasendifferenzen miteinander, um ein Signal abzuleiten, das für die Fluidströmung kennzeichnend ist, und ein Regelsignal abzuleiten zur Regelung der Erregungsfrequenzen der akustischen Druckwellen derart, daß die vom ersten Punkt ausgesendete Wellenlänge gleich der vom zweiten Punkt ausgesendeten Wellenlänge ist, wobei die Wellenlängen konstant gehalten werden,

Abwarten einer ausgewählten Zeitdauer und anschließendes Messen der akustischen Druckwellen in dem Fluid,

dadurch gekennzeichnet, daß die Aussendung akustischer Druckwellen in jeder der vorbestimmten Zeitperioden unmittelbar im Anschluß an die Beendigung der Aussendung in der vorangehenden Zeitperiode begonnen wird, wobei die ausgewählte Zeitperiode wenigstens 3/4 der Aussendeperiode beträgt.

2. Verfahren nach Anspruch 1, weiterhin enthaltend das Einstellen der Sendefrequenz auf eine Frequenz, bei der eine vorbestimmte Wellenlänge zwischen den ersten und zweiten Punkten auftritt ohne Rücksicht auf die Art oder Dichte des Fluides.

3. Verfahren nach Anspruch 1, bei dem die Sendefrequenz derart eingestellt wird, daß das von den Wandlern bestimmte System bei der akustischen Resonanz betrieben wird, um die Amplitude des an dem empfangenden Wandler erzeugten Signals zu maximieren.

4. Strömungsmessersystem zur Durchführung des Verfahrens nach Anspruch 1, enthaltend:

einen akustische Energie abgebenden, spannungsgesteuerten Oszillator (42),

zwei Wandler (16, 18) zum alternierenden Aussenden akustischer Druckwellen für vorbestimmte Zeitperioden stromaufwärts bzw. stromabwärts in einem Fluid, das auf einem Weg fließt, wobei die Wandler (16, 18) im Abstand zueinander längs des Strömungsweges des Fluides angeordnet sind, wobei der nicht-sendende Wandler als Empfangswandler arbeitet, wenn der jeweils andere Wandler als sendender Wandler arbeitet,

einen Phasendetektor (28), der mit den Signalen versorgt ist, die dem sendenden Wandler (16, 18) zugeführt sind und von dem empfangenden Wandler (18, 16) jeweils abgegeben werden, eine erste Schalteinrichtung (20, 26) zum alternierenden Verbinden eines der genannten Wandler (16, 18) mit dem spannungsgesteuerten Oszillator (42) und des anderen der Wandler (18, 16) mit dem Phasendetektor (28),

eine Signalverarbeitungseinrichtung (30—38) zum Verarbeiten von Signalen miteinander, die aus den Phasendifferenzsignalen abgeleitet werden, die von dem Phasendetektor (28) in den verschiedenen Schaltzuständen einer zweiten Schalteinrichtung (50, 52) abgegeben werden, die zusammenwirkend mit der ersten Schalteinrichtung (20, 26) betrieben wird, um ein Signal abzugeben, das für die Fluidströmung kennzeichnend ist,

wobei die Signalverarbeitungseinrichtung eine Schaltung (38) zum Erzeugen eines Differenzsignals aufweist, das von der Differenz zwischen den in zwei aufeinanderfolgenden Zeitperioden gemessenen Phasendifferenzen abhängig ist, wobei die Größe und das Vorzeichen dieses Differenzsignals direkt auf die augenblickliche Fluidströmungsgeschwindigkeit bzw. deren Richtung bezogen sind,

wobei die Signalverarbeitungseinrichtung weiterhin eine Schaltung (36) zum Erzeugen eines Summensignals in Abhängigkeit von der Summe der Phasendifferenzen aufweist,

eine Schaltung (40), der das Summensignal zugeführt ist, um automatisch die Frequenz des spannungsgesteuerten Oszillators (42) so einzustellen, daß die Wellenlängen der akustischen Druckwellen, die von den Wandlern (16, 18) erzeugt werden, konstant und gleich gehalten werden,

eine kombinierte Logik- und Takteinrichtung (54) zum Steuern der ersten und zweiten Schalteinrichtungen (20, 26, 50, 52) derart, daß die Auswertung der akustischen Druckwellen nur nach einer ausgewählten Zeitperiode in jeder der genannten Zeitperioden begonnen wird,

dadurch gekennzeichnet, daß die Logik- und Takteinrichtung (54) dazu eingerichtet ist, die erste Schalteinrichtung (20, 26) derart zu steuern, daß die Aussendung bei jedem Wandler (16, 18) unmittelbar im Anschluß an das Ende der vorangehenden Aussendung des jeweils anderen Wandlers (18, 16) beginnt, und weiterhin so eingerichtet ist, daß die Signalverarbeitungseinrichtung (30—38) derart gesteuert wird, daß der Ausgang des Phasendetektors (28) nur im letzten Viertel einer solchen Sendezeitperiode ausgewertet wird.

**Revendications**

1. Procédé pour mesurer le débit d'un fluide dans un passage d'écoulement confiné, comprenant les étapes:

émission de compressions acoustiques pendant une période de temps prédéterminée en un premier point du passage d'écoulement confiné dans ledit fluide,

émission de compressions acoustiques pendant une période de temps prédéterminée en un second point du passage d'écoulement dans ledit fluide à la suite de la cessation de la première émission mentionnée, le second point étant espacé du premier point le long du passage d'écoulement du fluide,

mesure des compressions acoustiques dans le fluide au second point pendant l'émission de compressions acoustiques au premier point,

mesure des compressions acoustiques dans le fluide au premier point pendant l'émission de compressions acoustiques au second point,

détermination pendant chacune des périodes de temps des déphasages entre les compressions acoustiques reçues et les compressions acoustiques émises et traitement des déphasages mesurés entre eux afin d'en tirer un signal indicatif du débit du fluide et un signal de réglage pour régler les fréquences d'excitation des compressions acoustiques de telle sorte que la longueur d'onde émise par le premier point soit égale à celle émise par le second point, les longueurs d'onde étant maintenues constantes,

attente d'une période de temps choisie et puis mesure des compressions acoustiques dans le fluide, caractérisé en ce que l'émission de compressions acoustiques pendant chacune des périodes de temps prédéterminées est déclenchée juste à la suite de la cessation de l'émission pendant la période de temps précédente, la période de temps choisie étant au moins égale aux trois-quarts de la période d'émission.

2. Procédé selon la revendication 1, comprenant en outre le réglage de la fréquence d'émission à une fréquence où une longueur d'onde prédéterminée apparaît entre les premier et second points indépendamment du type ou de la densité du fluide.

3. Procédé selon la revendication 1, dans lequel la fréquence d'émission est réglée de telle sorte que le système défini par les transducteurs est mis en fonctionnement à la résonance acoustique pour rendre maximale l'amplitude du signal produit dans le transducteur récepteur.

4. Système de mesure de débit pour mettre en oeuvre le procédé de la revendication 1, comprenant:

un moyen oscillateur commandé en tension d'excitation d'énergie acoustique (42),

deux transducteurs (16, 18) pour émettre alternativement des ondes de compressions acoustique pendant des périodes de temps prédéterminées en amont et en aval respectivement dans un fluide s'écoulant dans un passage, les transducteurs (16, 18) étant disposés en relation spatiale le long du passage d'écoulement du fluide, le transducteur non-émetteur étant efficace comme transducteur récepteur lorsque l'autre transducteur respectif de ces transducteurs est efficace comme transducteur émetteur,

un détecteur de phase (28) pourvu des signaux envoyés au transducteur émetteur (16, 18) et engendrés en sortie du transducteur récepteur (18, 16), respectivement,

un premier moyen de commutation (20, 26) pour connecter alternativement un des transducteurs (16, 18) au moyen oscillateur commandé en tension (42) et l'autre des transducteurs (18, 16) au détecteur de phase (28),

un moyen de traitement de signaux (30—38) pour traiter des signaux entre eux tirés des signaux de déphasage issus du détecteur de phase (28) dans les différentes conditions de commutation d'un second moyen de commutation (50, 52) rendu actif en coopération avec le premier moyen de commutation (20, 26), pour fournir ainsi un signal indicatif du débit du fluide,

le moyen de traitement de signaux comprenant un circuit (38) pour produire un signal de différence fonction de la différence entre les déphasages mesurés pendant deux périodes de temps successives, l'amplitude et le signe du signal de différence étant en relation directe avec la vitesse instantanée d'écoulement du fluide et son sens, respectivement,

le moyen de traitement de signaux comprenant en outre un circuit (36) pour produire un signal de sommation fonction de la somme des déphasages,

un circuit (40) étant pourvu dudit signal de sommation pour régler automatiquement la fréquence du moyen oscillateur commandé en tension (42) pour que les longueurs d'onde des ondes de compression acoustique produites par les transducteurs (16, 18) soient maintenues constantes et égales,

un moyen à logique combinée et horloge (54) pour commander les premier et second moyens de commutation (20, 26, 50, 52) de sorte que l'évaluation des compressions acoustiques ne soit déclenchée qu'après une période de temps choisie dans chacune des périodes de temps,

caractérisé en ce que:

le moyen à logique et horloge (54) est agencé pour commander le premier moyen de commutation (20, 26) de telle sorte que l'émission pour chaque transducteur (16, 18) commence juste à la suite de la fin de l'émission précédente de l'autre transducteur respectif (18, 16), et agencé en outre pour commander le moyen de traitement de signaux (30—38) de telle sorte que le signal de sortie du détecteur de phase (28) ne soit évalué que dans le dernier quart des périodes de temps d'émission.

FIG. 1

FIG. 2

$Q_0$

$Q_1$

$Q_2$

$Q_3, X, A.$

$\overline{Q}_3, Y, B.$

$IE$

$U$ (S/H enable)

$D$ (S/H enable)

$IR, E$

25 ms

3